# EUROPEAN PATENT APPLICATION

(11) **EP 1 276 267 A2**
(43) Date of publication of application: **15.01.2003**
(21) Application number: 02015718.6
(22) Date of filing: 12.07.2002
(51) Int. Cl.: H04L 1/18, H04L 1/08, H04L 1/00

(54) **Hybrid automatic repeat-request system and method**

(30) Priority: 12.07.2001 KR 2001041949
(71) Applicant: SAMSUNG ELECTRONICS CO., LTD., Suwon-City, Kyungki-do (KR)
(72) Inventor: Kim, Min-Goo, Suwon-shi, Kyonggi-do (KR); Ha, Sang-Hyuck, Suwon-shi, Kyonggi-do (KR)
(74) Representative: Grünecker, Kinkeldey, Stockmair & Schwanhäusser Anwaltssozietät

(57) **Abstract**

There is provided a method for encoding input information bits by a quasi-complementary turbo code (QCTC) at a predetermined code rate to generate codeword symbols and transmitting the generated codeword symbols. The method comprises selecting one pattern among predetermined patterns corresponding to some or all of the generated codeword symbols in order to transmit the generated codeword symbols by a sub-packet length determined according to a data rate; reading information corresponding to the data rate, the sub-packet length and the selected pattern from a table in which identification information indicating the data rate, the sub-packet length and the selected pattern is previously mapped to given information; and transmitting the generated codeword symbols according to the read information and the selected pattern.

## Description

This application claims priority to an application entitled "Reverse Transmission Apparatus and Method for Improving Transmission Throughput in a Data Communication System" filed in the Korean Industrial Property Office on July 12, 2001 and assigned Serial No. 2001-41949, the contents of which are incorporated herein by reference.

### BACKGROUND OF THE INVENTION

### 1. Field of the Invention

The present invention relates generally to an apparatus and method for transmitting data in a data communication system, and in particular, to an apparatus and method for transmitting reverse data in a data communication system for high-speed data transmission.

### 2. Description of the Related Art

In general, for high-speed data transmission, a digital communication system employs HARQ (Hybrid Automatic Repeat Request) to increase transmission efficiency or transmission throughput. Unlike ARQ (Automatic Repeat Request) using only error detecting codes, the HARQ uses both the error detecting codes and error correcting codes at a transmitter, so a receiver simultaneously performs error detecting and error correcting, resulting in an increase in throughput of the system. The reasons for using the HARQ are as follows.

First, the HARQ is used when a reference channel condition (or state) defined in a system design process varies as time passes. In this case, a channel status indicator (CSI) indicating a difference between the reference channel condition and a reception channel condition detected by the receiver cannot be correctly fed back from the receiver to the transmitter. For example, when a variation rate of the CSI is higher than a feedback rate, or when it is difficult to establish a quality feedback channel, the HARQ is used. In this case, the receiver can cope with a variation in the channel condition by utilizing proper error correcting codes, and this is a fundamental object of the HARQ. Of course, when the HARQ is used, the throughput depends upon a code rate of the error correcting codes. Thus, it is very important how to determine the code rate.

Second, another reason for using the HARQ is to increase average throughput in a channel environment where an S/N (Signal-to-Noise ratio) dynamic range is wide. That is, when the reference channel condition defined in the system design process varies as time passes, the channel status indicator (CSI) indicating a difference between the reference channel condition and a reception channel condition detected by the receiver can be fed back from the receiver to the transmitter. However, if a dynamic range of a coding parameter designed based on the reference channel condition is narrower than the S/N dynamic range, it is possible to request retransmission using the HARQ. However, if the dynamic range of the coding parameter designed based on the reference channel condition is wider than the S/N dynamic range, it is not necessary to use the HARQ.

Third, even in a static channel condition where the channel condition is not so different from the reference channel condition, the HARQ is used to prevent a packet loss caused by random errors such as pulse noise, user interference, packet congestion, shot noise, switching error and missing. For example, the HARQ is used to prevent the packet loss in a high-speed wired data network. In this case, the error correcting codes having a high code rate are chiefly used to increase the throughput.

The HARQ is divided into one technique using symbol combining between initial transmission and retransmission and another technique not using the symbol combining. The former technique using the symbol combining is superior in performance to the latter technique not using the symbol combining. Further, the symbol combining is classified into hard combining and soft combining. The soft symbol combining is much superior to the hard symbol combining in terms of performance. Therefore, it is generally known that the HARQ using the soft symbol combining provides the best performance. The HARQ using the soft symbol combining includes various techniques, and they are typically divided into a Chase combining technique and an incremental redundancy (IR) technique. The characteristics and operating methods of the Chase combining technique and the incremental redundancy technique are well known in the art, so a detailed description thereof will not be provided. A description will be made of the characteristics of the soft symbol combining.

If it is assumed that a coding rate of a code used for channel transmission is constant and a channel condition (or SNR (Signal-to-Noise Ratio)) is also constant even though the HARQ is used in a channel not using the soft symbol combining, a frame error rate (FER) at initial transmission is not different from an FER at retransmission. However, the HARQ using the soft symbol combining improves the channel condition, i.e., SNR by a soft combining gain in proportion to the number of retransmissions. As a result, an increase in number of the retransmissions leads to a decrease in the FER.

A transmitter using the HARQ recognizes only two states, a good condition, and a bad condition from 1-bit information (ACK/NAK) transmitted from a receiver. The "good condition" indicates that a data transmission channel has a better channel condition than the reference channel condition, while the "bad condition" indicates that the data transmission channel has a worse channel condition than the reference channel condition. Therefore, an HARQ system determines whether the channel environment is bad or not, using a binary channel status indicator. If the channel environment is bad, the HARQ system retransmits symbols according to the Chase combining technique or the incremental redundancy technique, determined in the system design process. This operation is equivalent to increasing an effective SNR to a certain extent, i.e., increasing SNR of the symbols finally applied to a decoder of the receiver, and also equivalent to forcing a change to the transmission channel condition to the good condition through retransmission by the transmitter. Therefore, FER of the HARQ using the soft symbol combining decreases in proportion to the number of retransmissions.

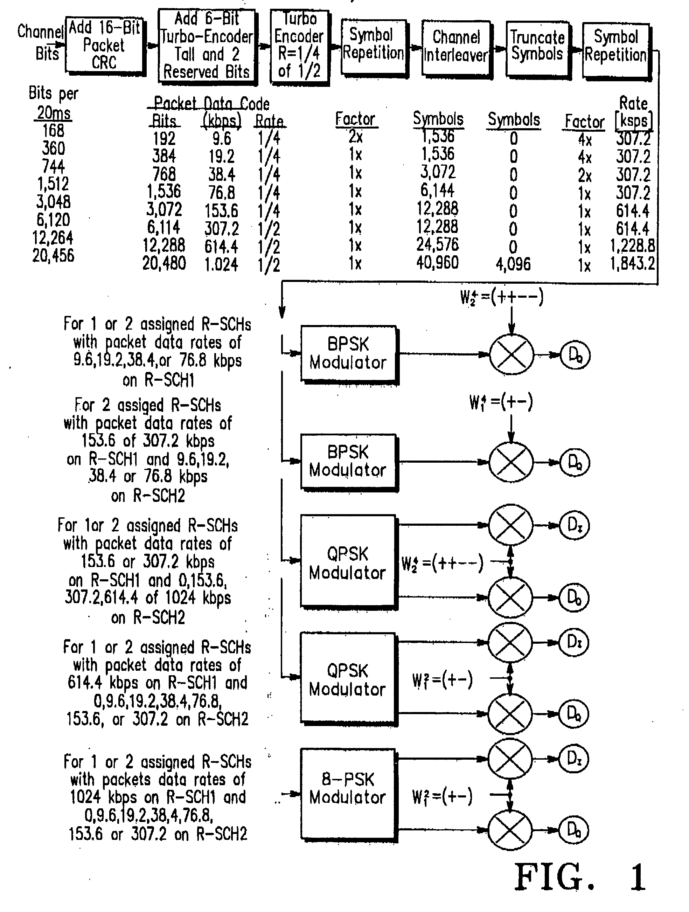

A 3GPP2 (3^{rd} Generation Partnership Project 2) 1xEV-DV (Evolution-Data and Voice) system illustrated in FIGs. 1 to 3, proposed as a next generation mobile communication system, is a typical HARQ system.

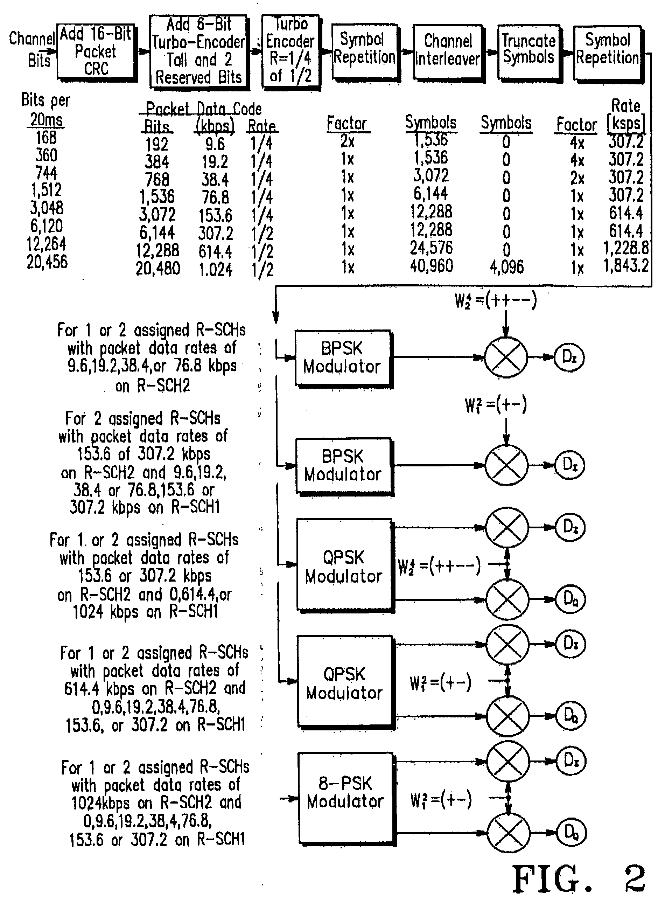

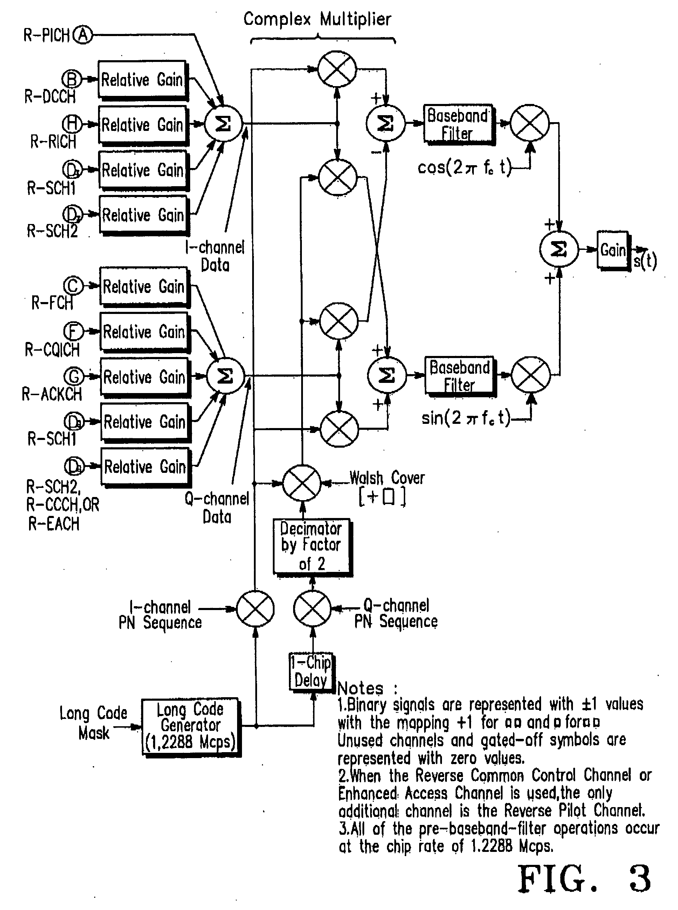

FIGs. 1 to 3 illustrate a reverse channel structure of a 1xEV-DV system according to the prior art. FIGs. 1 and 2 illustrate a transmitter for transmitting a reverse supplemental channel (R-SCH), one of reverse channels used in the 3GPP2 1xEV-DV system. As illustrated in FIGs. 1 and 2, the reverse supplemental chaimel includes a first reverse supplemental channel R-SCH1 and a second reverse supplemental channel R-SCH2. The R-SCH1 and the R-SCH2 have the same function block. FIG. 3 illustrates a structure for performing modulation, orthogonal function spreading and PN spreading on the R-SCH1 and R-SCH2 signals. As illustrated in FIGs. 1 and 2, the transmitter uses different error correcting codes (e.g., turbo codes) and error detecting codes (e.g., CRC (Cyclic Redundancy Check) codes) according to data rates. As illustrated in FIG. 3, signals on the respective channels are gain-controlled with relative gains and then subject to code division multiplexing before being transmitted. The channel transmitter constructed as illustrated in FIGs. 1 to 3 selects one data rate determined by an upper layer among a plurality of data rates, and applies input data having a block size based on the selected data rate to an error detection encoder (e.g., 16-bit CRC encoder). The data output from the error detection encoder has 6 tail bits and 2 reserved bits added to the input data, the tail bits serve as termination bits for the turbo codes. A turbo encoder turbo-encodes the tail-added data. A stream of the turbo-encoded codeword symbols is subject to symbol repetition, channel interleaving, truncation and symbol repetition for rate matching with a transmission symbol rate. The stream of the symbols rate-matched with the transmission symbol rate is multiplied by a relative gain, and then subject to modulation, orthogonal function spreading and PN spreading before being transmitted.

The 3GPP2 1xEV-DV reverse channel structure illustrated in FIGs. 1 to 3 has the following problems.

### Problem #1

The existing channel structure uses error correcting codes having a code rate determined based on its data rate, and does not support the HARQ using the soft combining in a physical channel, like the Chase combining technique and the incremental redundancy technique. That is, the existing channel structure is designed to have a constant FER, using a constant code rate and a constant transmission power gain according to its data rate. The existing channel structure is designed to compensate a channel condition deviating from a target FER in the fundamental design process by reverse link power control (RLPC), and to control a deviation from the reference channel condition every period (e.g., 1.25msec) by the RLPC. For example, a reverse channel coding parameter of the 1xEV-DV standard uses power control between a designed SNR range and an actual SNR range of a channel, in order to maintain an SNR range that can be compensated through coding. The power control is used to correct the dynamic range of the channel to some extent, so that corrected dynamic range should be included in a dynamic range for the coding. However, even in this structure, if the power control fails to play its role well enough, the system should consider using other means such as the HARQ in order to increase the throughput.

For example, a dynamic range for reverse link power control (RLPC) is about 30dB, and in a 20msec frame, the dynamic range is between +15dB and -15dB. Therefore, actually, a transmission S/N control range provided by the RLPC in the 20msec reverse channel frame is restrictive. That is, the SNR control range provided by the RLPC is dependent on the data rate. For example, although the existing channel structure can sufficiently utilize the dynamic range of about 30dB at a data rate of 9.6kbps, the dynamic range is reduced at a data rate of 1Mbps, for several reasons, making it difficult to secure the reception performance. Therefore, it is necessary to compensate this problem by using the HARQ.

### Problem #2

A cascaded structure of turbo encoding, symbol repetition, channel interleaving, symbol repetition and pruning, a current error correcting code handling technique, is not proper to support the incremental redundancy (IR) technique. That is, disadvantageously, this structure uses different puncturing patterns at each retransmission, and uses pruning after channel interleaving at 1024kbps, thus reducing performance of the turbo codes. Also, the structure has another problem of determining redundancy patterns to optimize a code combining gain by soft combining. In addition, though both the Chase combining technique and the incremental redundancy technique are used in the reverse supplemental channel according to data rates, the structure has a problem of how to determine each redundancy patterns.

### Problem #3

Since the reverse channel has a very large difference between data rates, the throughput of each user is calculated based on a variation of the SNR and is likely to be changed step-wise. This translates into a loss of throughput. It is preferable to linearly maintain this portion in order to optimize the throughput. In order to reduce the throughput loss, it is possible to minimize a gap between throughput curves of the respective data rates using the IR-based HARQ that uses various code rates. However, it is not possible to use this method at the fixed code rate and the fixed puncturing pattern according to the data rates.

### Problem #4

The current 1xEV-DV reverse channel structure has the following problem. A cdma2000 (Code Division Multiple Access 2000) reverse channel structure, the matrix of the 1xEV-DV reverse channel structure, is designed such that the maximum data rate is limited to 307.2kbps. According to the data measured in an actual environment, it is known that the maximum data rate of the reverse supplemental channel is saturated at 307.2kbps. In this state, the 1xEV-DV reverse channel structure must increase transmission power in order to satisfy the target FER of 307.2kbps, 614.4kbps and 1024kbps that are likely to be used in the similar channel environment. However, if the transmission power of a mobile terminal increases in the reverse channel, the transmission power, including transmission power of other mobile terminals, increases except in the case where one or a few users exist in the same cell. This means an increase in an interference power level received over the reverse channel from the viewpoint of a base station controller (BSC), Accordingly, there is a need for a method of decreasing the FER through retransmission by utilizing the HARQ that uses the soft combining, in defiance of transmission delay. Of course, this method is not proper for a circuit mode with service time constraint. However, if the good channel condition exists at least once, the average throughput increases. Therefore, there is a demand for the HARQ that uses the soft combining at a high data rate, but the existing system does not support such HARQ. This problem will be described in more detail herein below.

In the current 1xEV-DV reverse channel R-SCH, code rates and input block sizes are determined according to the data rates, as illustrated in Table 1 below. In the case of the reverse channel, it is uncertain when the user will transmit traffic, so it is preferable to assume that there always exist as many traffic channel users as the number of the users using the same cell on the average. This means that there always exists average ROT (Rise of Thermal) in the reverse channel. Of course, it is understood that the maximum data rate or maximum instantaneous data rate can be used in the good channel condition where a mobile terminal is located in the vicinity of a base station where a small number of users exist. However, in most cases, the assumption that the average ROT exists is considered in the actual system design process. According to the actually measured data, if only one user exists in the reverse channel of the cdma2000 1x system, the system can support a service at a data rate of a maximum of 307.2kbps in the circuit mode, but cannot support the service at a data rate higher than 307.2kbps. This means that the system cannot support the service at the data rate of 307.2kbps, even though a small number of reverse fundamental channel (R-FCH) users exist. Therefore, even the mobile terminals using the high data rate transmit data at limited transmission power. In order to solve this problem, it is preferable to calculate a target FER by collecting retransmission power based on the soft combining by retransmission. On this assumption, the current reverse link channel parameters will be described with reference to Table 1.

**Table 1:**

| Data rates of reverse channel | | | | | | | |
|---|---|---|---|---|---|---|---|
| Service Availability | Data Rate | Code Rate | Rep | Channel Interleaver | Pruning | Symbol Repetition | Symbol Rate |
| Y | 9.6 kbps | 1/4 | 2 | 1536 | 0 | ×4 | 307.2 ksps |
| Y | 19.2 kbps | 1/4 | 1 | 1536 | 0 | ×4 | 307.2 ksps |
| Y | 38.4 kbps | 1/4 | 1 | 3072 | 0 | ×2 | 307.2 ksps |
| Y | 76.8 kbps | 1/4 | 1 | 6144 | 0 | ×1 | 307.2 ksps |
| Y | 153.6 kbps | 1/4 | 1 | 12288 | 0 | ×1 | 614.4 ksps |
| N | 307.2 kbps | 1/2 | 1 | 12288 | 0 | ×1 | 614.4 ksps |
| N | 614.4 kbps | 1/2 | 1 | 24576 | 0 | ×1 | 12288 ksps |
| N | 1024.4 kbps | 1/2 | 1 | 40960 | 4096 | ×1 | 12288 ksps |
| • Frame length: 20msec | | | | | | | |
| • Effective code rate of 1024.4kbps is 5/9. | | | | | | | |

Table 1 illustrates data rates of the reverse channel on the assumption that a frame length is 20msec and an effective code rate of 1024.4kbps is 5/9. When a data rate of 153.6kbps is serviced, a power increase (or transmission symbol energy Es) required on average for the other high data rates is calculated as follows. For example, in the case of a data rate of 307.2kbps, the code rate increases from R=1/4 to R=1/2, so the data rate increases two times, making it necessary to increase Es by +3dB. Therefore, in order to maintain the same signal quality as that at the data rate of 153.6kbps, it is required to increase Es by about +3dB. Of course, the required power increase may be lower than this, since a turbo interleaving gain increases with the input data bock size. However, the difference between them is not so large, since there is a coding gain loss due to the increase in the code rate. In the case of a data rate of 614.4kbps, the data rate has increased two times at the same code rate R=1/2, so it is necessary to increase Es by +3dB compared with the data rate of 307.2kbps, or on average +6dB compared with the data rate of 153.6kbps. In the case of a data rate of 1024.4kbps, the data rate has increased two times again at the same code rate, so it is necessary to increase Es by +9dB on average compared with the data rate of 153.6kbps. Summarizing, the required average number of retransmissions is illustrated in Table 2.

**Table 2:**

| Data rates and required transmission symbol energy of reverse channel | | | | | | | |
|---|---|---|---|---|---|---|---|
| Service Availability | Data Rate | Code Rate | Rep | Channel Interleaver | Symbol Rate | Es Loss | Average Retransmission |
| Y | 9.6 kbps | 1/4 | 2 | 1536 | 307.2 ksps | +12dB | 1 |
| Y | 19. kbps | 1/4 | 1 | 1536 | 307.2 ksps | +9dB | 1 |
| Y | 38.4 kbps | 1/4 | 1 | 3072 | 307.2 ksps | +6dB | 1 |
| Y | 76.8 kbps | 1/4 | 1 | 6144 | 307.2 ksps | +3dB | 1 |
| Y | 153.6 kbps | 1/4 | 1 | 12288 | 614.4 ksps | 0dB | 1 |
| N | 307.2 kbps | 1/4 | 1 | 12288 | 614.4 ksps | -3dB | 2 |
| N | 614.4 kbps | 1/4 | 1 | 24576 | 12288 ksps | -6dB | 3 |
| N | 1024.4 kbps | 1/4 | 1 | 40960 | 12288 ksps | -9dB | 4 |
| • Frame length: 20msec | | | | | | | |
| • Chase combining is assumed for counting number of average retransmissions. | | | | | | | |

Table 2 illustrates data rates and required transmission symbol energy of the reverse channel on the assumption that a frame length is 20msec and the Chase combining is used to count the average number of retransmissions. In the case of a data rate of 1024.4kbps, 4 retransmissions may occur on the average. Of course, in the good channel condition where only one user uses the reverse channel, the transmission can be successfully achieved at initial transmission. Therefore, when the 4 retransmissions occur on the average, all the R=1/2 codewords are repeatedly transmitted more than 4 times in order to minimize the transmission delay. Therefore, the incremental redundancy technique can be considered as the most effective method for this case. However, in a channel condition slightly better than this channel condition, it is not necessary to use the code rate R=1/2, so it is preferable to use a code having a high code rate. Of course, the base station controller (BSC) can select available data rates by scheduling and increase the throughput by assigning the selected data rates to the mobile terminals.

### Problem #5

For a prompt response, i.e., in order to reduce a round trip delay (RTD), the soft combining should be performed in the physical channel. However, in the current reverse channel structure, when errors occur in the transmission physical channel frame, the physical layer cannot request retransmission and just informs an upper layer of occurrence of the errors. The upper layer then determines whether errors have occurred in a transmission defined by the upper layer, and requests retransmission for the whole frame upon detecting the errors. An "RLP (Radio Link Protocol) NAK technique" is used for this operation, causing a serious time delay. For high-speed data processing, there is a demand for physical HARQ in which the physical layer performs rapid ACK/NACK processing.

### SUMMARY OF THE INVENTION

It is, therefore, an object of the present invention to provide an apparatus and method for transmitting reverse data using HARQ (Hybrid Automatic Repeat Request) in order to increase transmission throughput in a data communication system for high-speed data transmission.

It is another object of the present invention to provide an apparatus and method for determining a redundancy pattern used at initial transmission and retransmission in a data communication system.

In accordance with a first aspect of the present invention, there is provided a method for encoding input information bits by a quasi-complementary turbo code (QCTC) at a predetermined code rate to generate codeword symbols and transmitting the generated codeword symbols. The method comprises selecting one pattern among predetermined patterns corresponding to some or all of the generated codeword symbols in order to transmit the generated codeword symbols by a sub-packet length determined according to a data rate; reading information corresponding to the data rate, the sub-packet length and the selected pattern from a table in which identification information indicating the data rate, the sub-packet length and the selected pattern is previously mapped to given information; and transmitting the generated codeword symbols according to the read information and the selected pattern.

In accordance with a second aspect of the present invention, there is provided a method for selecting codeword symbols in an apparatus for encoding input information bits by a quasi-complementary turbo code (QCTC) at a predetermined code rate to generate codeword symbols and transmitting the generated codeword symbols. The method comprises the steps of: at initial transmission, selecting as many codeword symbols as a length determined based on a code rate determined based on a data rate, starting from a first symbol among the generated codewords; and at retransmission, selecting 1/2 of the codeword symbols, starting from a first symbol among the initially selected codeword symbols.

In accordance with a third aspect of the present invention, there is provided an apparatus for encoding input information bits by a quasi-complementary turbo code (QCTC) at a predetermined code rate to generate codeword symbols and transmitting the generated codeword symbols. The apparatus comprises a selector for selecting one pattern among predetermined patterns corresponding to some or all of the generated codeword symbols in order to transmit the generated codeword symbols by a sub-packet length determined according to a data rate, and selecting information corresponding to the data rate, the sub-packet length and the selected pattern, and codeword symbols based on the selected pattern, from a table in which the data rate, the sub-packet length and the selected pattern are previously mapped to given information; and a symbol repeater for repeating the symbols based on the selected pattern as many times as a number determined according to the data rate.

In accordance with a fourth aspect of the present invention, there is provided an apparatus for encoding input information bits by a quasi-complementary turbo code (QCTC) at a predetermined code rate to generate codeword symbols and transmitting the generated codeword symbols. The apparatus comprises an interleaver for interleaving the codeword symbols; and a selector for selecting one pattern among predetermined patterns corresponding to some or all of the generated codeword symbols in order to transmit the generated codeword symbols by a sub-packet length determined according to a data rate, and selecting information corresponding to the data rate, the sub-packet length and the selected pattern, and codeword symbols based on the selected pattern, from a table in which the data rate, the sub-packet length and the selected pattern are previously mapped to given information.

### BRIEF DESCRIPTION OF THE DRAWINGS

The above and other objects, features and advantages of the present invention will become more apparent from the following detailed description when taken in conjunction with the accompanying drawings in which:
FIGs. 1 to 3 illustrate a reverse channel structure for a 1xEV-DV system according to the prior art;
FIG. 4 illustrates a structure of an R-SCH1 transmitter according to an embodiment of the present invention;
FIG. 5 illustrates a structure of an R-SCH2 transmitter according to an embodiment of the present invention;
FIG. 6 illustrates a structure of an R-SCH1 transmitter according to another embodiment of the present invention;
FIG. 7 illustrates a structure of an R-SCH2 transmitter according to another embodiment of the present invention.
FIG. 8 illustrates a sub-packet structure and an SPID mapping relationship at a low data rate for a sub-packet transmission operation with a low data rate according to a first embodiment of the present invention;
FIG. 9 illustrates a sub-packet structure and an SPID mapping relationship at a high data rate for a sub-packet transmission operation with a high data rate according to a first embodiment of the present invention;
FIG. 10 illustrates a sub-packet structure and an SPID mapping relationship at a low data rate for a sub-packet transmission operation with a low data rate according to a second embodiment of the present invention;
FIGs. 11 to 13 illustrate a sub-packet structure and an SPID mapping relationship at a high data rate for a sub-packet transmission operation with a high data rate according to a second embodiment of the present invention;
FIG. 14 illustrates a sub-packet structure and an SPID mapping relationship at a low data rate for a sub-packet transmission operation with a low data rate according to a third embodiment of the present invention;
FIG. 15 illustrates a sub-packet structure and an SPID mapping relationship at a high data rate for a sub-packet transmission operation with a high data rate according to a third embodiment of the present invention; and
FIG. 16 illustrates a sub-packet structure and an SPID mapping relationship at a low data rate for a sub-packet transmission operation with a low data rate according to a fourth embodiment of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

In the following description, a digital communication system according to the present invention uses HARQ (Hybrid Automatic Repeat Request) to increase transmission throughput for high-speed data transmission. Herein, the present invention will be described with reference to an example where the HARQ is applied to a channel characterized such that a variation in the channel condition is not significant but the transmission power of the transmission channels is relatively low or its upper limit is restricted or controlled according to the data rate. Such a channel includes a reverse channel for the 3GPP2 1xEV-DV system. That is, the present invention applies the HARQ to a data communication system such as the 1xEV-DV system and provides a new reverse channel structure to which the HARQ is applied.

The present invention provides a method for transmitting frames using the HARQ in order to increase transmission throughput in the 1xEV-DV data communication system for high-speed data transmission, and a channel structure therefore. The present invention uses QCTCs (Quasi-Complementary Turbo Codes) for the HARQ, and selectively uses the Chase combining technique and the incremental redundancy (IR) technique according to the data rates in transmitting the frames, thereby making it possible to increase the transmission throughput.

The channel structure according to the present invention uses high-level modulation such as BPSK (Binary Phase Shift Keying), QPSK (Quadrature Phase Shift Keying), and 8-PSK (8-ary Phase Shift Keying). An HARQ-based encoder for retransmission of high-speed data uses the QCTCs. The QCTCs are well disclosed in Korean patent application No. 2000-62151, filed on October 21, 2000 by the applicant, entitled "Apparatus and Method for Generating codes in Communication System", the contents of which are incorporated herein by reference. Therefore, a detailed description of the QCTC will not be provided for simplicity.

The present invention uses the HARQ using the soft combining, i.e., uses both the HARQ using the Chase combining technique and the HARQ using the incremental redundancy combining technique. In the following description, the invention will provide a structure using one of the two techniques according to the data rate used. For example, the Chase combining is used at a low data rate of below 153.6kbps. Since the code rate R is 1/4 at the low data rate, a gain obtained by the incremental redundancy technique is smaller than a gain obtained by the Chase combining technique. Further, since the data rate provided in an actual field by the cdma2000 1 x system is lower than 307.2kbps, when the data rate is lower than 153.6kbps, the Chase combining is used to increase Es by +3dB with one retransmission, thereby reducing signaling overhead and retransmissions. In contrast, the incremental redundancy technique is used at the high data rate of over 153.6kbps. When signaling channels are prepared to use the incremental redundancy technique, it is possible to use the incremental redundancy technique even at the low data rate. For example, since the code rate is R=1/2 for the data rate of 307.2kbps, the incremental redundancy technique is used at the data rate of 307.2kbps. Further, since a receiver includes a buffer memory and a reverse channel for the incremental redundancy technique, and a signaling channel associated with a forward channel, the incremental redundancy technique can be used even at the low data rate of below 153.6kbps. Therefore, at the low data rate, the invention selectively uses the Chase combining technique and the incremental redundancy technique. Switching between the Chase combining and the incremental redundancy technique can be simply realized using the QCTCs, and this will be described in detail herein below. In addition, when the incremental redundancy technique is used at the high data rate, the maximum number of retransmissions, determined according to the data rates during system operation, can be 4 or more. The maximum number of retransmissions can be freely determined without departing from the spirit and scope of the invention.

In the following description, the present invention will provide a reverse channel structure using the soft combining and the QCTC. Next, a description will be made of a frame transmission operation, i.e., initial transmission and retransmission operations in the reverse channel structure according to the present invention. The initial transmission and retransmission operations are performed in the incremental redundancy technique for the high data rate, and performed in either the incremental redundancy technique or the Chase combining technique for the low data rate.

Before a detailed description of the reverse channel structure and the frame transmission method according to an embodiment of the present invention, the reverse channel structure according to the prior art will be described.

Referring to FIGs. 1 and 2, the reverse channel for the current 3GPP2 1xEV-DV system has a cascaded structure of turbo encoding, symbol repetition, symbol interleaving, symbol repetition, and pruning. The cascaded structure is not proper to support the incremental redundancy technique. That is, disadvantageously, this structure uses different puncturing patterns at each retransmission, and uses pruning after channel interleaving at 1024kbps, thus reducing performance of the turbo codes. Also, the structure has another problem of determining redundancy patterns to optimize a code combining gain by soft combining. In addition, when both the Chase combining technique and the incremental redundancy technique are used in the reverse supplemental channel according to data rates, the structure has a problem of how to determine redundancy patterns. To solve this problem, the present invention modifies the reverse channel structure in the following method.
- The existing R=1/4 turbo encoder is modified into an R=1/5 turbo encoder. This is to optimize a code combining gain in the IR (Incremental Redundancy) HARQ.
- QCTCs are used for a method of simply generating various redundancy patterns associated with the code rates used in the incremental redundancy technique, and also for optimization of the redundancy patterns, i.e., for a maximum coding gain.
- QCTCs are used for optimization of combined codes, i.e., a maximum coding gain when the various redundancy patterns associated with the code rates used in the incremental redundancy technique are soft-combined, i.e., code-combined.
- When a frame length, i.e., a code length for retransmission, is different from that for initial transmission in the incremental redundancy technique, the corresponding channel interleavers must be separately defined, and such a structure is not proper for the reverse channel. Therefore, such channel interleaving is performed before redundancy pattern selection. In the QCTC scheme, a channel interleaving block is included in a QCTC code generator. Thus, it is possible to generates an arbitrary redundancy pattern using an R=1/5 QCTC codeword, so there is no need for separate channel interleaving.
- If pruning is used after channel interleaving, it is very difficult to secure non-puncturing on systematic symbols of the turbo codes. Puncturing the systematic symbols leads to a drastic reduction in performance of the turbo codes for the high data rate. To solve this problem, the QCTCs are used. By controlling an initial transmission symbol and a last transmission symbol used for QCTC symbol selection, it is possible to resolve the puncturing problem of the systematic symbols and simply determine the redundancy pattern.

### A. Reverse Channel Structure

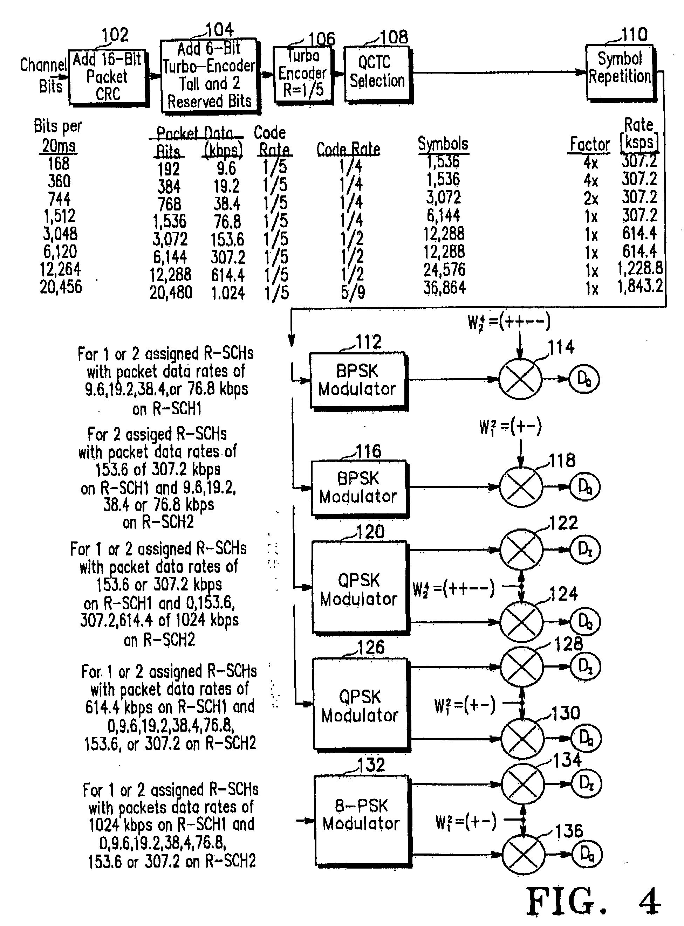

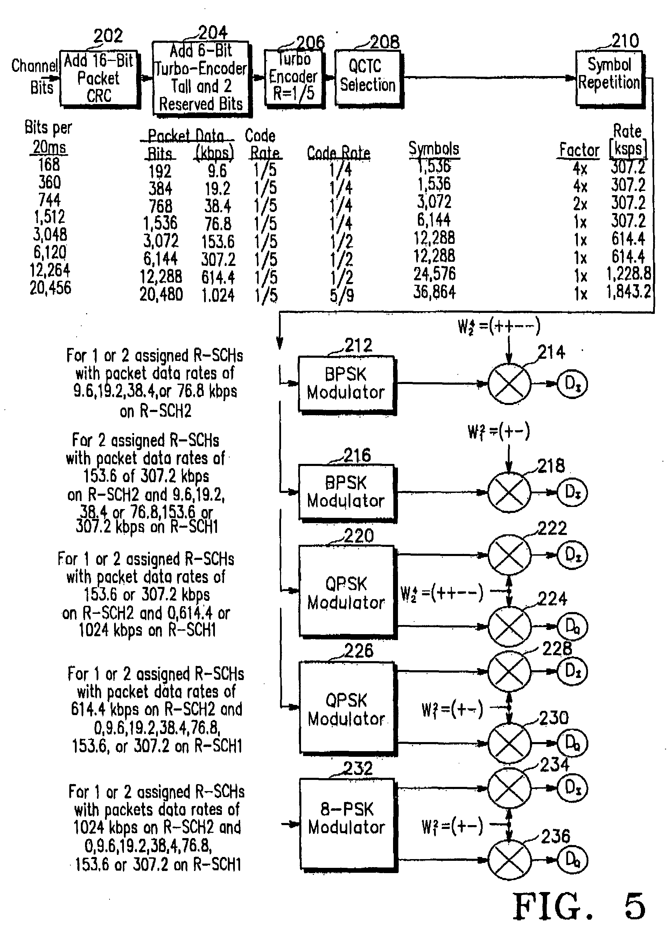

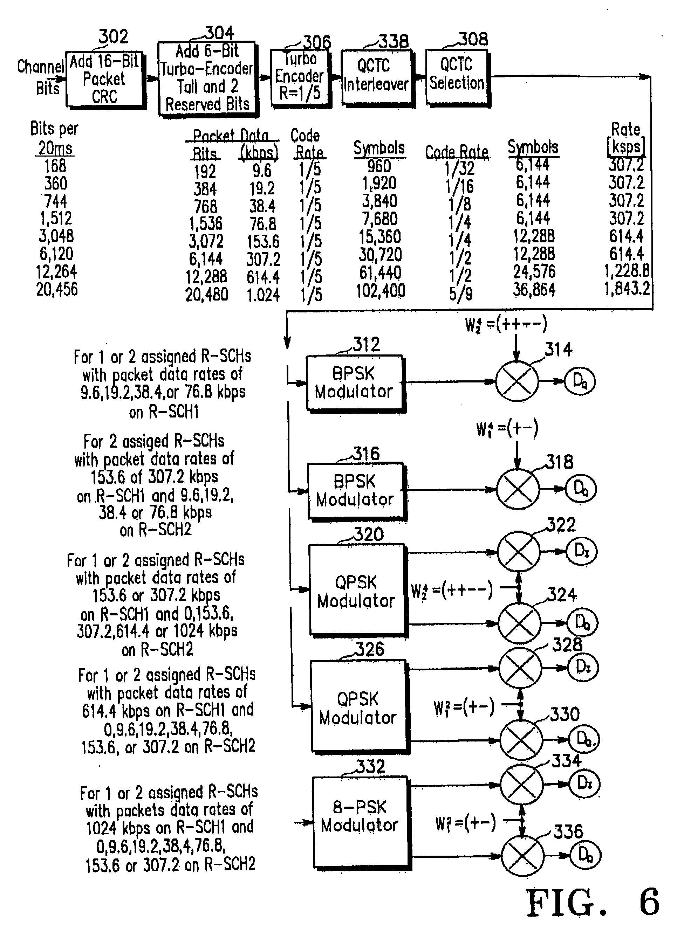

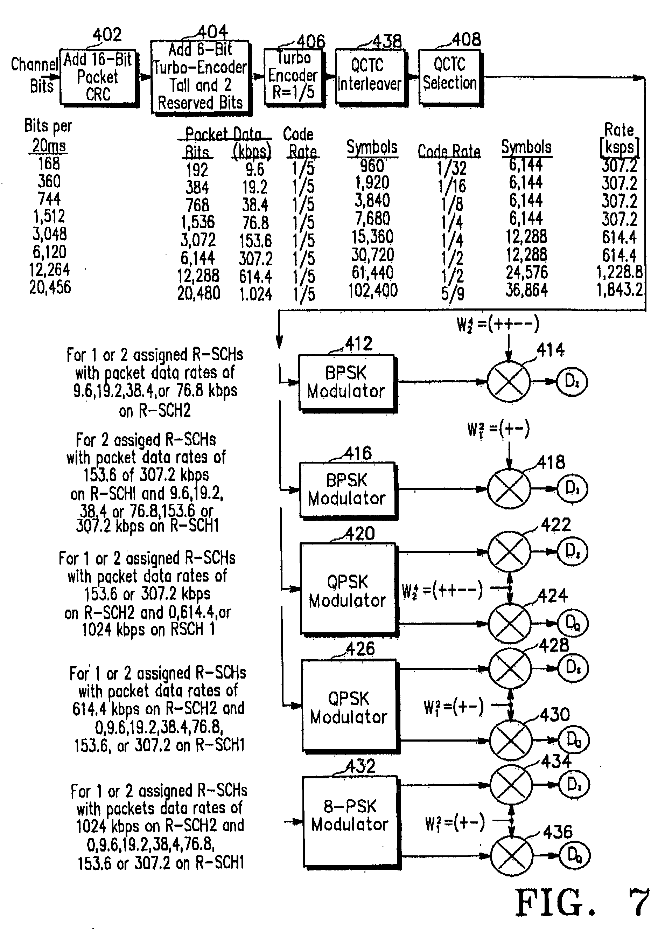

FIGs. 4 to 7 illustrate a structure of a reverse channel transmitter according to different embodiments of the present invention. This structure is applied to a reverse supplemental channel (R-SCH) of the 1xEV-DV data communication system. In the 1xEV-DV system, the reverse supplemental channel is divided into a first reverse supplemental channel R-SCH1 and a second reverse supplemental channel R-SCH2. FIG. 4 illustrates a structure of an R-SCH1 transmitter according to an embodiment of the present invention, and FIG. 5 illustrates a structure of an R-SCH2 transmitter according to an embodiment of the present invention. FIG. 6 illustrates a structure of an R-SCH1 transmitter according to another embodiment of the present invention, and FIG. 7 illustrates a structure of an R-SCH2 transmitter according to another embodiment of the present invention. The R-SCH transmitters of FIGs. 4 and 5 are identical to each other in structure, and simply different from each other in reference numerals. Also, the R-SCH transmitters of FIGs. 6 and 7 are identical to each other in structure, and simply different from each other in reference numerals. Therefore, a description of the R-SCH transmitters according to the different embodiments will be made with reference to FIGs. 4 and 6 only, for simplicity.

Referring to FIG. 4, the R-SCH transmitter according to an embodiment of the present invention includes a CRC (Cyclic Redundancy Code) adder 102, a tail bit adder 104, a turbo encoder 106, a QCTC selector 108, a symbol repeater 110, a plurality of high-level modulators (112, 116, 120, 126 and 132), and a plurality of multipliers (114, 118, 122, 124, 128, 130, 134 and 136). The CRC adder 102 adds an error correcting code such as 16-bit packet CRC to input channel bits. The tail bit adder 104 adds 6 tail bits and 2 reserved bits, as termination bits, to an output of the CRC adder 102. The turbo encoder 106 turbo-encodes an output of the tail bit adder 104 and generates codeword symbols. The turbo encoder 106 generates the codeword symbols using QCTC with a code rate R=1/5. The QCTC selector 108 selects the QCTC symbols generated by the turbo encoder 106. The symbol repeater 110 repeats the QCTC symbols selected by the QCTC selector 108 according to a predetermined factor.

The high-level modulators include BPSK (Binary Phase Shift Keying) modulators 112 and 116, QPSK (Quadrature Phase Shift Keying) modulators 120 and 126, and an 8-PSK (8-ary Phase Shift Keying) modulator 132. The BPSK modulator 112 modulates data with a data rate of 9.6kbps, 19.2kbps, 38.4kbps or 76.8kbps on the R-SCH1. The BASK modulator 116 modulates data with a data rate of 153.6kbps or 307.2kbps on the R-SCH1, and modulates data with a data rate of 9.6.kbps, 19.2kbps, 38.4kbps or 76.8kbps on the R-SCH2. The QPSK modulator 120 modulates data with a data rate of 153.6kbps or 307.2kbps on the R-SCH1, and modulates data with a data rate of 0kbps, 153.6kbps, 307.2kbps, 614.4kbps or 1024kbps on the R-SCH2. The QPSK modulator 126 modulates data with a data rate of 614.4kbps on the R-SCH1, and modulates data with a data rate of 0kbps, 9.6kbps, 19.2kbps, 38.4kbps, 76.8kbps, 153.6kbps or 307,2kbps on the R-SCH2. The 8-PSK modulator 132 modulates data with a data rate of 1024kbps on the R-SCH1, and modulates data with a data rate of 0kbps, 9.6kbps, 19.2kbps, 38.4kbps, 76.8kbps, 153.6kbps or 307.2kbps on the R-SCH2.

The multipliers include multipliers 114, 118, 122, 124, 128, 130, 134, and 136. The multiplier 114 multiplies an output of the modulator 112 by a preset Walsh function W₂⁴, an orthogonal function. The multiplier 118 multiplies an output of the modulator 116 by a preset Walsh function W₁². The multiplier 122 multiplies an output of the modulator 120 by a preset Walsh function W₂⁴, and the multiplier 124 multiplies an output of the modulator 120 by the preset Walsh function W₂⁴. The multiplier 128 multiplies an output of the modulator 126 by a preset Walsh function W₁², and the multiplier 130 multiplies an output of the modulator 126 by the preset Walsh function W₁². The multiplier 134 multiplies an output of the modulator 132 by a preset Walsh function W₁², and the multiplier 136 multiplies an output of the modulator 132 by the preset Walsh function W₁². The multiplied results by the multipliers are provided to the transmitter which performs multiplexing, PN (Pseudo Noise) spreading, and frequency shifting on a plurality of channel signals, as illustrated in FIG. 3.

An operation of transmitting frames (or sub-packets) by the QCTC selector 108 and the symbol repeater 110 of the R-SCH transmitter according to an embodiment of the present invention is differently performed according to whether the data rate is a high data rate or a low data rate. In the case of a low data rate less than or equal to 153.6kbps, a sub-packet transmission operation based on the incremental redundancy technique or the Chase combining technique can be performed by the QCTC selector 108 and the symbol repeater 110. In contrast, in the case of a high data rate greater than 153.6kbps, a sub-packet transmission operation based on the incremental redundancy technique can be performed by the QCTC selector 108 and the symbol repeater 110. The operation of transmitting the sub-packets according to the incremental redundancy technique by the QCTC selector 108 and the symbol repeater 110 will be described in detail herein below with reference to first to third embodiments.

Referring to FIG. 6, the R-SCH transmitter according to another embodiment of the present invention includes a CRC adder 302, a tail bit adder 304, a turbo encoder 306, a QCTC interleaver 338, a QCTC selector 308, a plurality of high-level modulators (312, 316, 320, 326 and 332), and a plurality of multipliers (314, 316, 322, 324, 328, 330, 334 and 336). Unlike the R-SCH transmitter of FIG. 4, the R-SCH transmitter of FIG. 6 includes the QCTC interleaver 338 intervening between the turbo encoder 306 and the QCTC selector 308, and instead, excludes the symbol repeater 110. The QCTC interleaver 338 interleaves the QCTC codeword symbols encoded by the turbo encoder 306, and provides the interleaved symbols to the QCTC selector 308.

An operation of transmitting frames (or sub-packets) by the QCTC selector 308 of the R-SCH transmitter according to another embodiment of the present invention is differently performed according to whether the data rate is a high data rate or a low data rate. In the case of a low data rate less than or equal to 153.6kbps, a sub-packet transmission operation based on the incremental redundancy technique or the Chase combining technique can be performed by the QCTC selector 308. In contrast, in the case of a high data rate greater than 153.6kbps, a sub-packet transmission operation based on the incremental redundancy technique can be performed by the QCTC selector 308. An operation of transmitting initial sub-packets by the QCTC selector 308 will be described in detail herein below with reference to fourth embodiment.

### B. Frame Transmission

In the channel structure described above, initial transmission and retransmission operations on the frames (or sub-packets) are performed in the incremental redundancy technique at a high data rate, and performed in either the incremental redundancy technique or the Chase combining technique at a low data rate. That is, the incremental redundancy technique can transmit frames at both the low data rate and the high data rate. It should be noted that the frame transmission at the low data rate can also be performed by the Chase combining technique, as mentioned above. The frame transmission by the incremental redundancy technique is equivalent to determining redundancy patterns used at initial transmission and retransmission, and transmitting the frames (or sub-packets) according to the selected redundancy patterns, and this will be described herein with reference to 3 different embodiments. A first embodiment provides a method of performing initial transmission and retransmission on frames using DTX (Discrete Transmission) periods. A second embodiment provides a method of performing initial transmission and retransmission on frames by symbol repetition. A third embodiment provides a method of performing initial transmission and retransmission on frames by symbol repetition, wherein the frame used at initial transmission is identical in length to the frame used at retransmission. Operations according to the first to third embodiments are performed by the QCTC selectors 108 and 208, and the symbol repeaters 110 and 210 of FIGs. 4 and 5. The frame transmission by the Chase combining will be described with reference to a fourth embodiment. The fourth embodiment will be described with reference to an initial transmission operation only, and this operation is performed by the QCTC selectors 308 and 408 of FIGs. 6 and 7.

In the following description, the term "SPID" as used herein refers to sub-packet ID (Identification), and "EP" refers to encoded packet. Further, Fs indicates a first symbol and Ls indicates a last symbol among the codeword symbols of the frame transmitted by the QCTC. Therefore, if the number of symbols of the frame to be transmitted is M and the number of symbols of an R=1/5 code is 5L, symbol transmission starts at Fs and ends at Ls among 5L symbols. If Ls<Fs, the transmitter repeatedly transmits 5L R=1/5 QCTC symbols as many times as an integer smaller than or equal to (the number of symbols/5L) of the frame, starting from Fs, and continuously transmits the remaining part until Ls. Such a symbol selection method is performed in accordance with a QCTC symbol selection algorithm illustrated in Table 3.

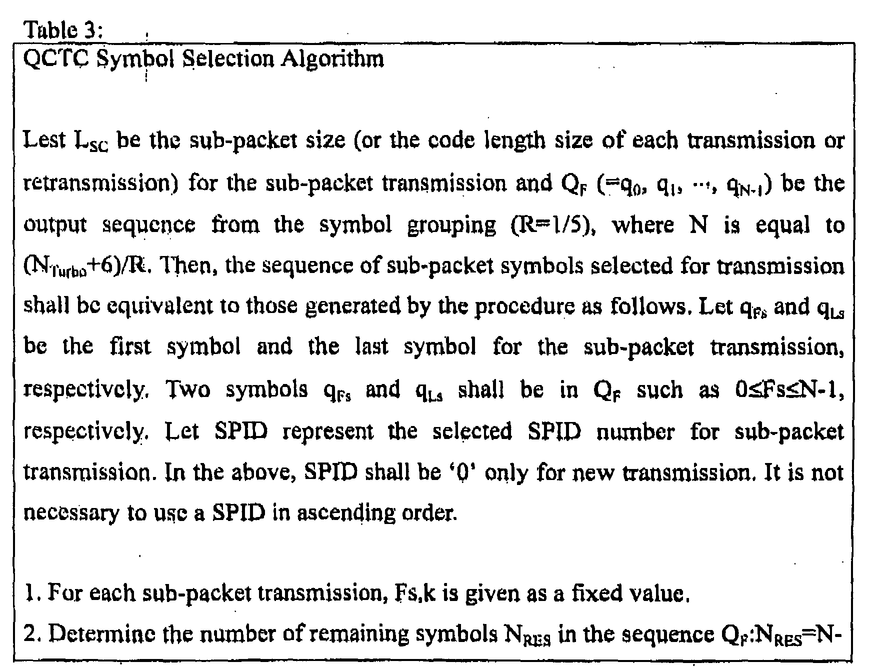

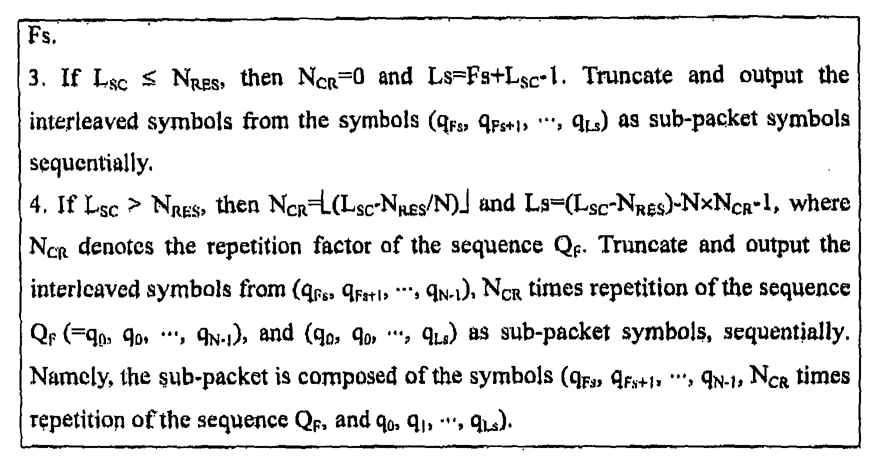

### Embodiment #1: Retransmission with DTX

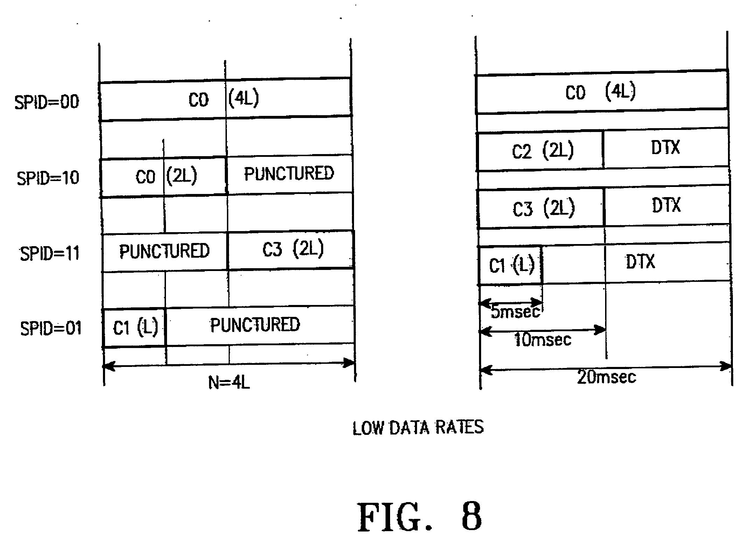

FIG. 8 illustrates a sub-packet structure and an SPID mapping relationship at a low data rate (e.g., 9.6kbps to 153.6kbps) for a sub-packet transmission operation with a low data rate according to a first embodiment of the present invention. Here, the code rate is R=1/4.

Referring to FIG. 8, the codewords previously determined according to the SPIDs are used. The SPIDs can be transmitted in a given order, However, two types of SPIN mappings are used according to the data rates. The sub-packet is transmitted in the incremental redundancy technique at the low data rate (e.g., 9.6kbps to 153.6kbps) where the code rate R is 1/4. For example, an R=1/4 codeword with SPID=00 is transmitted at initial transmission. At a retransmission request, an R=1 codeword with SPID=01 is transmitted. At another retransmission request, either an R=1 codeword with SPID=01 or an R=1/2 codeword with SPID=10 may be transmitted. At a next retransmission request, an R=1/2 codeword with SPID=11 may be transmitted. The SPID selection after SPID=00 is optimally made depending on a carrier-to-interference ratio (C/I) reported by the BTS (Base Station Transceiver System).

In addition, there are two preferable methods of transmitting the encoded symbols. A first method is to transmit the encoded symbols in the order of SPID=00 at initial transmission, SPID=01 at first retransmission, SPID=10 at second retransmission, SPID=11 at third retransmission, and SPID=00 at fourth retransmission. A second method is to transmit the encoded symbols in the order of SPID=00 at initial transmission, SPID=00 at first retransmission, SPID=01 at second retransmission, SPID=01 at third retransmission, SPID=11 at fourth retransmission, and SPID=00 at fifth retransmission. The order of the SPID is defined such that a symbol after the last symbol of the current sub-packet becomes the first symbol of the next sub-packet and the initial sub-packet starts from the first symbol of the encoded symbols.

To this end, it is necessary to puncture the codewords generated by the existing 20msec frame before transmission. It is preferable to transmit 50% or 25% of the codeword symbols in order to allocate optimal transmission power, and the reduced transmission power is allocated to other reverse channel users, thereby increasing the entire cell throughput. This can be realized by two different methods. A first method is to transmit the R-SCH by DTX. That is, positions in R=1/4 full codewords of the sub-packets are previously fixed according to the SPIDs, and a length of the sub-packets is also previously determined according to the SPIDs, so the receiver can calculate all the information for the DTX from the SPIDs. A second method is to multiplex initial transmission and retransmission. That is, this method is to transmit a new encoded packet at the portion pruned by the DTX. This method is advantageous in that the R-SCH is not subject to the DTX and the initial transmission and the retransmission are performed at the same time, but disadvantageous in that a scheduler must be adaptively controlled to secure optimal packing efficiency. It is also possible to use R=1/4 Chase combining within a low data rate range.

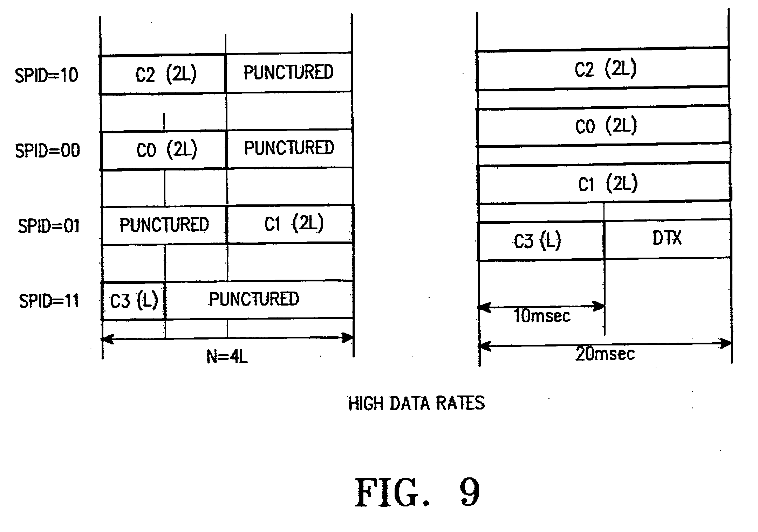

FIG. 9 illustrates a sub-packet structure and an SPID mapping relationship at a high data rate (e.g., 307.2kbps to 1024.4kbps) for a sub-packet transmission operation with a high data rate according to a first embodiment of the present invention. Here, the code rate is R=1/2.

Referring to FIG. 9, the sub-packet is transmitted in the incremental redundancy technique at the high data rate (e.g., 307.2kbps to 1024.4kbps) where the code rate R=1/2. An R=1/2 codeword with SPID=00 is transmitted at initial transmission. At a retransmission request, an R=1/2 codeword with SPID=01 is transmitted. At another retransmission request, either an R=1/2 codeword with SPID=10 or an R=1 codeword with SPID=11 may be transmitted. At a next retransmission request, an R=1 codeword with SPID=11 may be transmitted. The SPID selection after SPID=00 is optimally made by the BTS.

In addition, there are two preferable methods of transmitting the encoded symbols. A first method is to transmit the encoded symbols in the order of SPID=00 at initial transmission, SPID=01 at first retransmission, SPID=10 at second retransmission, SPID=11 at third retransmission, and SPID=00 at fourth retransmission. A second method is to transmit the encoded symbols in the order of SPID=00 at initial transmission, SPID=00 at first retransmission, SPID=01 at second retransmission, SPID=01 at third retransmission, SPID=11 at fourth retransmission, and SPIN=00 at fifth retransmission. The order of the SPID is defined such that a symbol after the last symbol of the current sub-packet becomes the first symbol of the next sub-packet and the initial sub-packet starts from the first symbol of the encoded symbols.

To this end, it is necessary to puncture the codewords generated by the existing 20msec frame before transmission. It is preferable to transmit 50% of the codeword symbols in order to allocate optimal transmission power, and the reduced transmission power is allocated to other reverse channel users, thereby increasing the entire cell throughput. This can be realized by two different methods. A first method is to subject the R-SCH to the DTX. That is, positions in R=1/4 full codewords of the sub-packets are previously fixed according to the SPIDs, and a length of the sub-packets is also previously determined according to the SPIDs, so the receiver can calculate all the information for the DTX from the SPIDs. A second method is to multiplex initial transmission and retransmission. That is, this method is to transmit a new encoded packet at the portion pruned by the DTX. This method is advantageous in that the R-SCH is not subject to the DTX and the initial transmission and the retransmission are performed at the same time, but disadvantageous in that a scheduler must be adaptively controlled to secure optimal packing efficiency.

The R=1/2 incremental redundancy technique allocates excessive transmission power for retransmission, when the current R-SCH structure has a good channel condition. In addition, when 2-bit SPIDs are used, there are 4 available redundancy patterns, so it is preferable to use sub-packets with a smaller size.

### Embodiment #2: Retransmission with Symbol Repetition with R=1/5 Base Turbo Codes

As mentioned above, the DTX-based method according to the first embodiment uses a maximum of 75% of the DTX in a 20msec frame period allocated to the data rates, possibly causing fluctuation of ROT (Rise Over Thermal). To solve this problem, the second embodiment applies the incremental redundancy technique to all the data rates in the following methods.
- The codewords previously determined according to the SPIDs are used.
- The SPIDs can be transmitted in a given order, and have a maximum of 4 redundancy patterns.
- For initial transmission, SPID=00 is used.
- When initially transmitted sub-packet is lost, the sub-packet with SPID=00 can be repeatedly transmitted.
- R=1/5 full codewords are used to maximize a coding gain.
- QCTCs are used instead of turbo encoding, symbol puncturing, channel interleaving, and pruning.
- Sub-codes (or sub-packets) are selected by the QCTC symbol selection algorithm. That is, Fs and Ls are used.
- Fs and Ls allocated to the SPIDs are constant.
- Adaptive code rates: R=1/4, R=1/2, R=1/1
- For the low data rates, symbol repetition is used at retransmission.

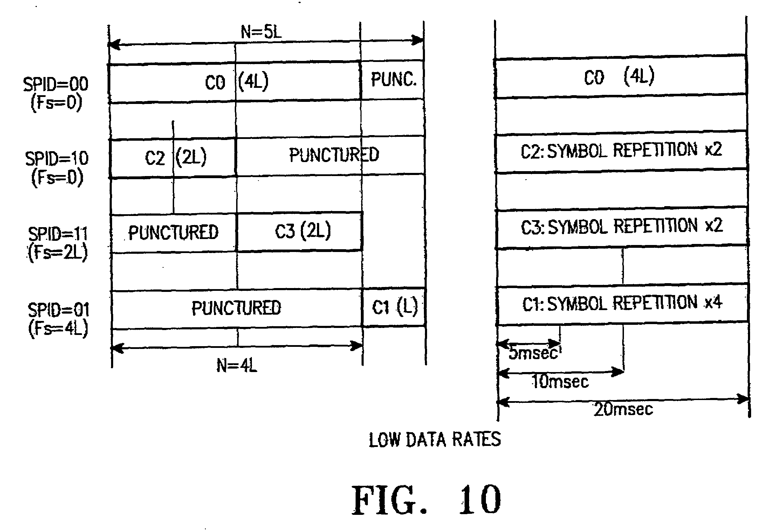

FIG. 10 illustrates a sub-packet structure and an SPID mapping relationship at a low data rate (e.g., 9.6kbps to 153.6kbps) for a sub-packet transmission operation with a low data rate according to a second embodiment of the present invention. Here, the code rate is R=1/4.

Referring to FIG. 10, the sub-packet is transmitted in the incremental redundancy technique at the low data rate (e.g., 9.6kbps to 153.6kbps) where the code rate R is 1/4. A redundancy is constructed with an R=1/4 initial transmission sub-code with SPID=00 and an R=1/2 retransmission sub-code with SPID=10 or SPID=11, or an R=1 retransmission sub-code with SPID=01. The reason for constructing the redundancy in this way is as follows. In most cases, a target FER of initial transmission is low for this class, so the frequency of retransmission requests is not so high. Thus, in many cases, the maximum number of retransmissions is 1. Therefore, the R=1 sub-code with SPID=01 is used for this.

In addition, there are two preferable methods of transmitting the encoded symbols. A first method is to transmit the encoded symbols in the order of SPID=00 at initial transmission, SPID=01 at first retransmission, SPID=10 at second retransmission, SPID=11 at third retransmission, and SPID=00 at fourth retransmission. A second method is to transmit the encoded symbols in the order of SPID=00 at initial transmission, SPID=00 at first retransmission, SPID=01 at second retransmission, SPID=01 at third retransmission, SPID=11 at fourth retransmission, and SPID=00 at fifth retransmission. The order of the SPID is defined such that a symbol after the last symbol of the current sub-packet becomes the first symbol of the next sub-packet and the initial sub-packet starts from the first symbol of the encoded symbols.

Here, 4-time symbol repetition (or ×4 symbol repetition) is performed on the sub-code with SPID=01 in order to minimize fluctuation of the ROT. When a relative gain of initial transmission is 1.0, a relative gain of the retransmission on the sub-code with SPID=01 is 1/2, as illustrated in Table 4 below. Table 4 illustrates a relationship among relative gains, Fs, and repetition factors according to the SPIDs. Therefore, the receiver performs symbol combining by accumulating the symbol-repeated signals 4 times. As a result, the transmission time increases 4 times as compared with the DTX-based method, so it is possible to desirably use the intact 20msec time diversity gain. Next, if there exist a plurality of users, the BSC may not transmit a sub-code C0 with SPID=00 to the mobile terminal according to the limit of the ROT. In this case, a sub-code with SPID=10 is transmitted to 100% utilize the available resource. SPID=11 is also used for the same purpose. Of course, even in the case where the BSC transmits C0 with SPID=00 to the mobile terminal, it is possible to use sub-codewords with SPID=10 and SPID=11 though allocable retransmission power due to the ROT is low. In this case, a difference between this method and the method of simply gain-controlling the C0 is as follows. Compared with the Chase combining technique for repeatedly transmitting the C0, the method of transmitting the C2 allocates the same energy to the systematic symbols, resulting in an improvement in performance. Therefore, there is a performance difference between (C0,C0) Chase combining technique and (C0,C1) incremental redundancy technique.

**Table 4:**

| relative gains, Fs, and repetition factors according to SPIDs | | | | | |
|---|---|---|---|---|---|
| SPID | Code Rate | Input Block Size | Fs | Relative Gain | Repetition |
| 00 | 1/4 | 4L | 0 | 1.0 | ×1 |
| 01 | 1/1 | L | 4L | 1/2 | ×4 |
| 10 | 1/2 | 2L | 0 | 0.707 | ×2 |
| 11 | 1/2 | 2L | 2L | 0.707 | ×2 |

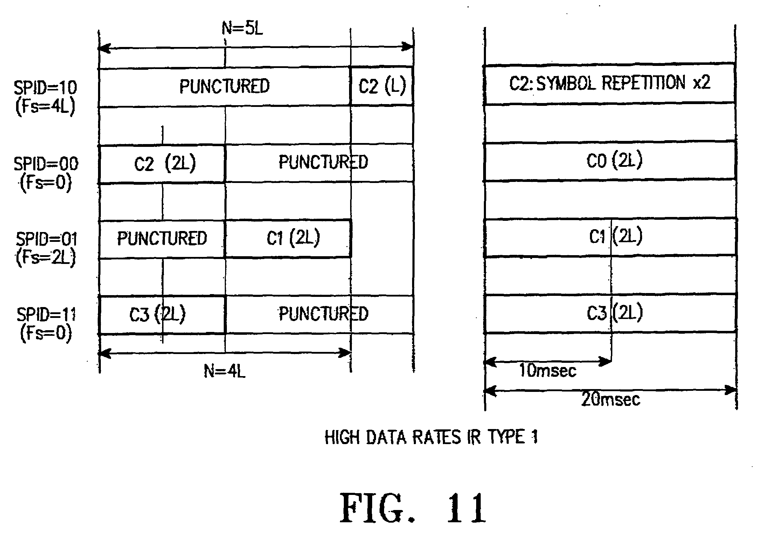

FIGs. 11 to 13 illustrate a sub-packet structure and an SPID mapping relationship at a high data rate (e.g., 307.2kbps to 1024kbps) for a sub-packet transmission operation with a high data rate according to a second embodiment of the present invention. Here, the code rate is R=1/2. As illustrated in the drawings, for this class, a redundancy is constructed with an R=1/2 initial transmission sub-code with SPID=00 and an R=1/2 retransmission sub-code with SPID=01, SPID=10 or SPID=11 (Here, FIG. 11 is exceptional). The reason for constructing the redundancy in this way is as follows. In most cases, a target PER of initial transmission is high for this class, so the frequency of retransmission requests is very high. Thus, in many cases, the maximum number of retransmissions is larger than 2. Therefore, the R=1/2 sub-code with SPID=01, SPID=10 or SPID=11 is used for this.

FIG. 11 illustrates a method of utilizing an R=1 sub-code for which the BSC allocates only low transmission power. This method also simultaneously performs symbol repetition and relative gain control, like in FIG. 10 for the low data rate.

In addition, there are two preferable methods of transmitting the encoded symbols. A first method is to transmit the encoded symbols in the order of SPID=00 at initial transmission, SPID=01 at first retransmission, SPID=10 at second retransmission, SPID=11 at third retransmission, and SPID=00 at fourth retransmission. A second method is to transmit the encoded symbols in the order of SPID=00 at initial transmission, SPID=00 at first retransmission, SPID=01 at second retransmission, SPID=01 at third retransmission, SPID=11 at fourth retransmission, and SPID=00 at fifth retransmission, The order of the SPID is defined such that a symbol after the last symbol of the current sub-packet becomes the: first symbol of the next sub-packet and the initial sub-packet starts from the first symbol of the encoded symbols.

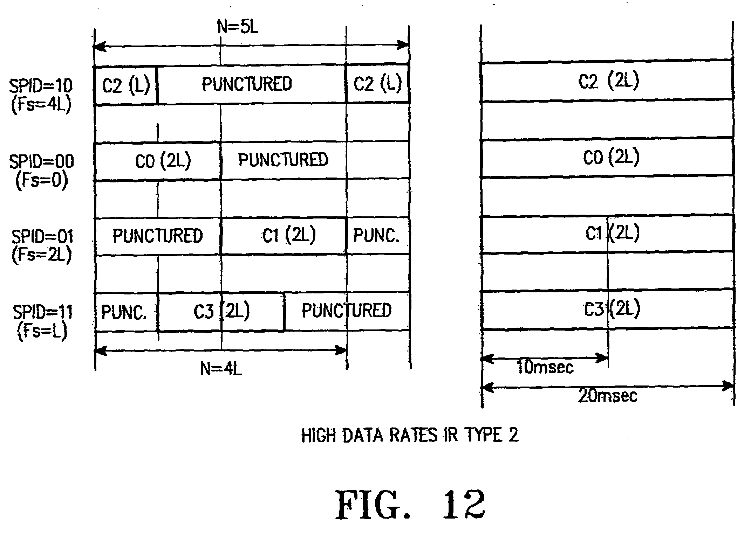

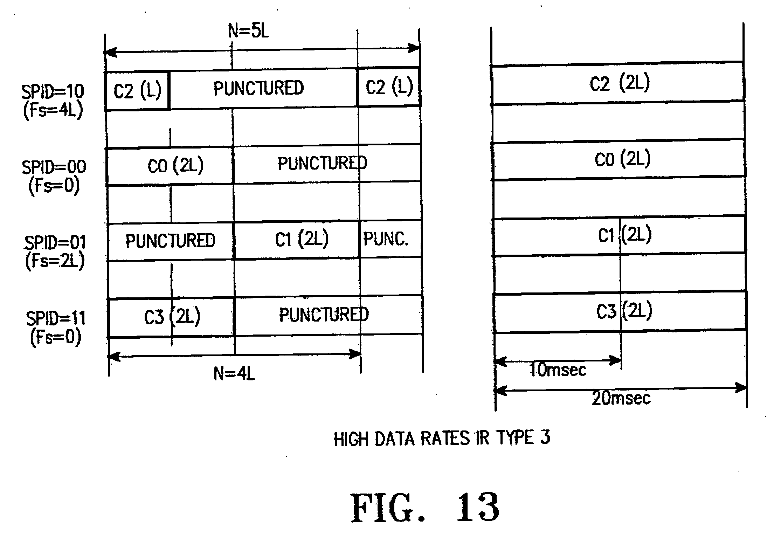

FIGs. 12 and 13 illustrate how to construct a redundancy using an R=1/2 initial transmission sub-code with SPID=00 and an R=1/2 retransmission sub-code with SPID=01, SPID=10 or SPID=11. As illustrated in the drawings, an object of initial transmission and retransmission is to maximize an R=1/5 code combining gain, and further to provide a redundancy structure for stressing the systematic symbols. A difference between FIG. 12 and FIG. 13 lies in selecting a redundancy for emphasizing the systematic symbols. As illustrated in the drawings, a fixed Fs is used for the SPIDs. That is, a fixed point mode is used. For example, in the case of 1024kbps, an actual code rate is higher than 1/2. In this case, therefore, Fs=2L is unconditionally used for SIPD=01. On the other hand, selection of the SPIDs is freely made by the transmitter.

In addition, there are two preferable methods of transmitting the encoded symbols. A first method is to transmit the encoded symbols in the order of SPID=00 at initial transmission, SPID=01 at first retransmission, SPID=10 at second retransmission, SPID=11 at third retransmission, and SPID=00 at fourth retransmission. A second method is to transmit the encoded symbols in the order of SPID=00 at initial transmission, SPID=00 at first retransmission, SPID=01 at second retransmission, SPID=01 at third retransmission, SPID=11 at fourth retransmission, and SPID=00 at fifth retransmission. The order of the SPID is defined such that a symbol after the last symbol of the current sub-packet becomes the first symbol of the next sub-packet and the initial sub-packet starts from the first symbol of the encoded symbols.

### Embodiment #3

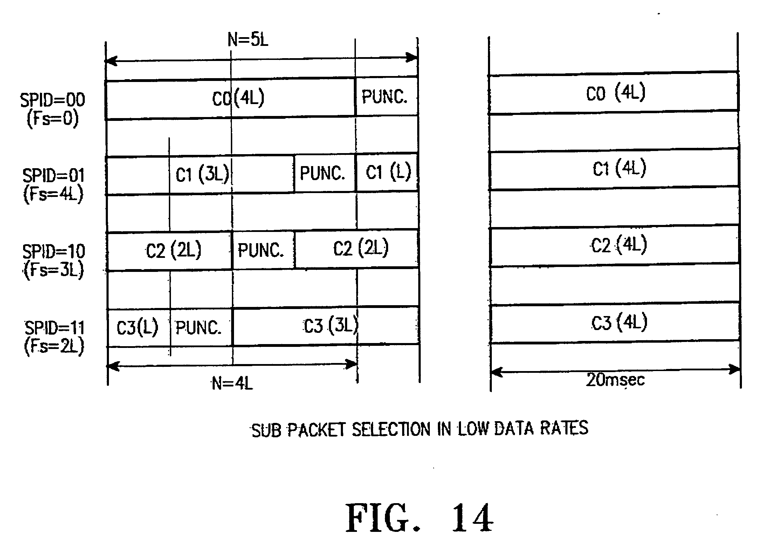

FIG. 14 illustrates a sub-packet structure and an SPID mapping relationship at a low data rate (e.g., 9.6kbps to 153.6kbps) for a sub-packet transmission operation with a low data rate according to a third embodiment of the present invention. Here, the code rate is R*=*1/4.

In addition, there are two preferable methods of transmitting the encoded symbols. A first method is to transmit the encoded symbols in the order of SPID=00 at initial transmission, SPID=01 at first retransmission, SPID=10 at second retransmission, SPID=11 at third retransmission, and SPID=00 at fourth retransmission. A second method is to transmit the encoded symbols in the order of SPID=00 at initial transmission, SPID=00 at first retransmission, SPID=01 at second retransmission, SPID=01 at third retransmission, SPID=11 at fourth retransmission, and SPID=00 at fifth retransmission. The order of the SPID is defined such that a symbol after the last symbol of the current sub-packet becomes the first symbol of the next sub-packet and the initial sub-packet starts from the first symbol of the encoded symbols.

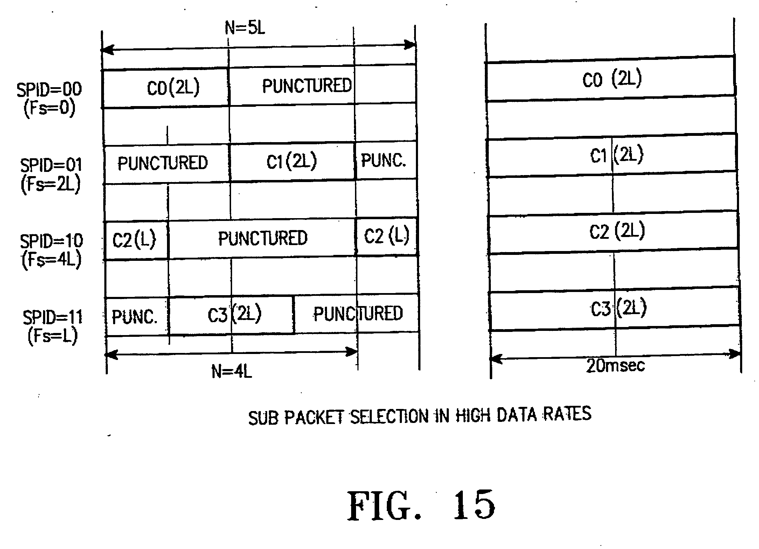

FIG. 15 illustrates a sub-packet structure and an SPID mapping relationship at a high data rate (e.g., 307.2kbps to 1024.4kbps) for a sub-packet transmission operation with a high data rate according to a third embodiment of the present invention. Here, the code rate is R=1/2.

In addition, there are two preferable methods of transmitting the encoded symbols. A first method is to transmit the encoded symbols in the order of SPID=00 at initial transmission, SPID=01 at first retransmission, SPID=10 at second retransmission, SPID=11 at third retransmission, and SPID=00 at fourth retransmission. A second method is to transmit the encoded symbols in the order of SPID=00 at initial transmission, SPID=00 at first retransmission, SPID=01 at second retransmission, SPID=01 at third retransmission, SPID=11 at fourth retransmission, and SPID=00 at fifth retransmission. The order of the SPID is defined such that a symbol after the last symbol of the current sub-packet becomes the first symbol of the next sub-packet and the initial sub-packet starts from the first symbol of the encoded symbols.

In the third embodiment illustrated in FIGs. 14 and 15, a length of the frame (or sub-packet) used at initial transmission is identical to a length of the frame used at retransmission. This method has the following advantages. That is, this method uses a fixed frame length while using the incremental redundancy technique, so it is possible to allocate constant symbol energy for 20msec. Therefore, it is easy to control the ROT by RLPC in the 20msec period. In addition, it is possible to use the redundancy structure even at the low data rate, and to obtain an available coding gain, i.e., a coding gain for the case where an R=1/5 turbo code is used as a basic code. A coding gain difference is significant in the fading channel rather than AWGN (Additive White Gaussian Noise). Therefore, a system operating in an actual fading environment can obtain a higher gain due to the coding gain difference. In addition, since the same frame length is used at initial transmission and retransmission, it is easy to reduce signaling overhead and acquire frame synchronization when realized.

### Embodiment #4

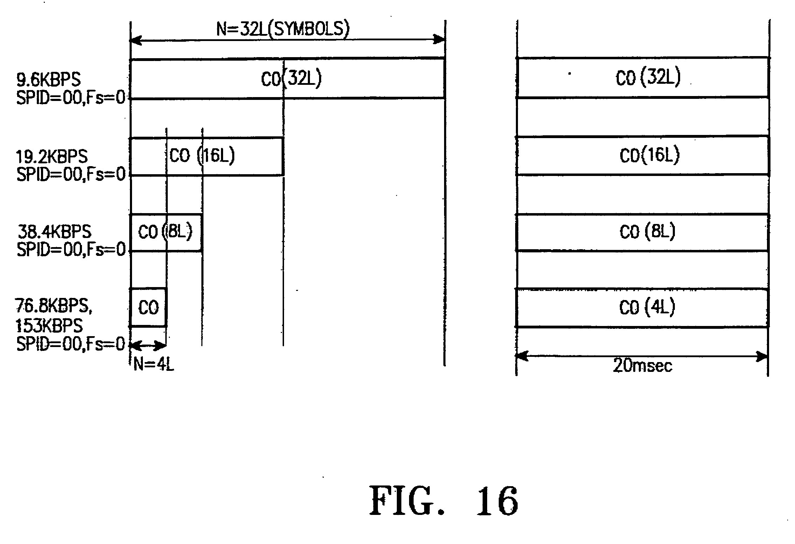

FIG. 16 illustrates a sub-packet structure and an SPID mapping relationship at a low data rate (e.g., 9.6kbps to 153.6kbps) for a sub-packet transmission operation with a low data rate according to a fourth embodiment of the present invention. FIG. 16 illustrates only an initial transmission operation of the sub-packet.

Tables 5 and 6 below illustrate encoding according to the data rates and SPIDs selected by QCTC symbol selection during sub-packet transmission according to the embodiments of the present invention. That is, Tables 5 and 6 illustrate bit structures of the SPIDs, rate indicators associated with the data rates. Specifically, Table 5 illustrates how to select SPIDs by the incremental redundancy technique at the low data rate, and Table 6 illustrates how to select SPIDs by the Chase combining technique at the low data rate, and select SPIDs by the incremental redundancy technique at the high data rate.

Referring to Table 5, when R-RICH (Reverse-Rate Indicator Channel) is comprised of 5 bits, all the data rates except 9.6kbps which has 3 types of the redundancy patterns can be designed to have 4 types of redundancy patterns. In addition, a null data rate is fundamentally used, and '00000' is fixedly used for the null data rate.

Referring to Table 6, since a fixed redundancy pattern is used for the low data rate, the rate indicators become the SPIDs. Therefore, it is possible to reduce the number of R-RICH bits to 4 in total.

**Table 5:**

| Encoding and SPID in QCTC Symbol Selection with Incremental Redundancy in Low Data Rates | | | | |
|---|---|---|---|---|
| Data Rate | Coding (binary) | SPID | Fs | L_{SC} |
| 0 | 00000 | NA | NA | NA |
| 9600 | 00001 | 00 | 0 | 4L |
| 9600 | 00010 | 01 | 4L | 4L |
| 9600 | 00011 | 10 | 3L | 4L |
| 19200 | 00100 | 00 | 0 | 4L |
| 19200 | 00101 | 01 | 4L | 4L |
| 19200 | 00110 | 10 | 3L | 4L |
| 19200 | 00111 | 11 | 2L | 4L |
| 38400 | 01000 | 00 | 0 | 4L |
| 38400 | 01001 | 01 | 4L | 4L |
| 38400 | 01010 | 10 | 3L | 4L |
| 38400 | 01011 | 11 | 2L | 4L |
| 76800 | 01100 | 00 | 0 | 4L |
| 76800 | 01101 | 01 | 4L | 4L |
| 76800 | 01110 | 10 | 3L | 4L |
| 76800 | 01111 | 11 | 2L | 4L |
| 153600 | 10000 | 00 | 0 | 4L |
| 153600 | 10001 | 01 | 4L | 4L |
| 153600 | 10010 | 10 | 3L | 4L |
| 153600 | 10011 | 11 | 2L | 4L |
| 307200 | 10100 | 00 | 0 | 2L |
| 307200 | 10101 | 01 | 2L | 2L |
| 307200 | 10110 | 10 | 4L | 2L |
| 307200 | 10111 | 11 | L | 2L |
| 614400 | 11000 | 00 | 0 | 2L |
| 614400 | 11001 | 01 | 2L | 2L |
| 614400 | 11010 | 10 | 4L | 2L |
| 614400 | 11011 | 11 | L | 2L |
| 1024000 | 11100 | 00 | 0 | 2L |
| 1024000 | 11101 | 01 | 2L | 2L |
| 1024000 | 11110 | 10 | 4L | 2L |
| 1024000 | 11111 | 11 | L | 2L |

**Table 6:**

| Encoding and SPID in QCTC Symbol Selection with Chase Combining in Low Data Rates and IR in High Data Rates | | | | |
|---|---|---|---|---|
| Data Rates (bps) | Coding (binary) | SPID | Fs | L_{SC} |
| 0 | 0000 | NA | NA | NA |
| 9600 | 0001 | 00 | 0 | 32L |
| 19200 | 0010 | 00 | 0 | 16L |
| 38400 | 0011 | 00 | 0 | 8L |
| 76800 | 0100 | 00 | 0 | 4L |
| 153600 | 0101 | 00 | 0 | 4L |
| 307200 | 0110 | 00 | 0 | 2L |
| 307200 | 0111 | 01 | 2L | 2L |
| 307200 | 1000 | 10 | 4L | 2L |
| 614400 | 1001 | 00 | 0 | 2L |
| 614400 | 1010 | 01 | 2L | 2L |
| 614400 | 1011 | 10 | 4L | 2L |
| 1024000 | 1100 | 00 | 0 | 1.8L |
| 1024000 | 1101 | 01 | 2L | 1.8L |
| 1024000 | 1110 | 10 | 4L | 1.8L |
| 1024000 | 1111 | 11 | L | 1.8L |

As described above, the present invention provides a method for transmitting frames using the HARQ to increase transmission throughput in the 1xEV-DV 'data communication system, and a channel structure therefor. The method according to the present invention uses QCTCs for HARQ-based encoder, and selectively uses the Chase combining technique and the incremental redundancy technique for frame transmission, thereby to increase transmission throughput.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for encoding input information bits by a quasi-complementary turbo code (QCTC) at a predetermined code rate to generate codeword symbols and transmitting the generated codeword symbols, the method comprising the steps of:
selecting one pattern among predetermined patterns corresponding to some or all of the generated codeword symbols in order to transmit the generated codeword symbols in a sub-packet length determined according to a data rate;
reading information corresponding to the data rate, the sub-packet length and the selected pattern from a table in which identification information indicating the data rate, the sub-packet length and the selected pattern is previously mapped to given information; and
transmitting the generated codeword symbols according to the read information and the selected pattern.

2. The method of claim 1, wherein at initial transmission, the codeword symbols are transmitted according to a preset pattern for initial transmission.

3. The method of claim 1 wherein at retransmission, the codeword symbols are retransmitted according to a pattern defined such that a symbol after the last symbol of a previously transmitted sub-packet becomes a first symbol of a current sub-packet.

4. The method of claim 1, wherein if the data rate is equal to or less than a preset threshold, the selected some or all of the codeword symbols are transmitted along with the read information in a Chase combining technique.

5. The method of claim 1, wherein if the data rate is equal to or less than a preset threshold, the selected some or all of the codeword symbols are transmitted along with the read information in an incremental redundancy technique.

6. The method of claim 1, wherein if the data rate is higher than a preset threshold, the selected some or all of the codeword symbols are transmitted along with the read information in an incremental redundancy technique.

7. The method of claim 1, wherein the selected some or all of the codeword symbols are transmitted along with the read information such that the selected codeword symbols and the read information are subject to discrete transmission (DTX) at the same transmission power.

8. The method of claim 1, wherein the selected some or all of the codeword symbols transmitted along with the read information are subject to symbol repetition before being transmitted.

9. The method of claim 8, wherein a frame length is variable during the symbol repetition.

10. The method of claim 1, wherein at a retransmission request for the transmitted codeword symbols, a pattern identical to or different from the pattern used for initial transmission is selected.

11. A method for selecting codeword symbols in an apparatus for encoding input information bits by a quasi-complementary turbo code (QCTC) at a predetermined code rate to generate codeword symbols and transmitting the generated codeword symbols, the method comprising the steps of:
at initial transmission, selecting as many codeword symbols as a length determined based on a code rate determined based on a data rate, starting from a first symbol among the generated codewords; and
at retransmission, selecting 1/2 of the codeword symbols, starting from a first symbol among the initially selected codeword symbols.

12. The method of claim 11, further comprising the step of selecting 1/2 of the initial codeword symbols, starting from a central position of the initially selected codeword symbols, at retransmission.

13. The method of claim 11, further comprising the step of selecting as many codeword symbols as the number of the input information bits among the initially selected codeword symbols, at retransmission.

14. An apparatus for encoding input information bits by a quasi-complementary turbo code (QCTC) at a predetermined code rate to generate codeword symbols and transmitting the generated codeword symbols, the apparatus comprising:
a selector for selecting one pattern among predetermined patterns corresponding to some or all of the generated codeword symbols in order to transmit the generated codeword symbols in a sub-packet length determined according to a data rate, and selecting information corresponding to the data rate, the sub-packet length and the selected pattern from a table in which the data rate, the sub-packet length and the selected pattern are previously mapped to given information, and selecting and outputting codeword symbols based on the selected pattern; and
a symbol repeater for repeating the symbols based on the selected pattern as many times as a number determined according to the data rate.

15. The apparatus of claim 14, wherein at initial transmission of the codeword symbols, the selector selects the codeword symbols according to a preset pattern for initial transmission.

16. The apparatus of claim 14, wherein at retransmission of the codeword symbols, the selector selects a pattern defined such that a symbol after the last symbol of a previously transmitted sub-packet becomes a first symbol of a current sub-packet.

17. The apparatus of claim 14, wherein the selector selects symbols according to an incremental redundancy technique, if the data rate is higher than a preset threshold.

18. The apparatus of claim 14, wherein the selector selects symbols according to an incremental redundancy technique, if the data rate is equal to or less than a preset threshold.

19. The apparatus of claim 14, wherein the selector selects symbols according to a Chase combining technique, if the data rate is equal to or less than a preset threshold.

20. An apparatus for encoding input information bits by a quasi-complementary turbo code (QCTC) at a predetermined code rate to generate codeword symbols and transmitting the generated codeword symbols, the apparatus comprising:
an interleaver for interleaving the codeword symbols; and
a selector for selecting one pattern among predetermined patterns corresponding to some or all of the generated codeword symbols in order to transmit the generated codeword symbols in a sub-packet length determined according to a data rate, and selecting information corresponding to the data rate, the sub-packet length and the selected pattern from a table in which the data rate, the sub-packet length and the selected pattern are previously mapped to given information, and selecting and outputting codeword symbols based on the selected pattern.

21. The apparatus of claim 20, wherein at initial transmission of the codeword symbols, the selector selects the codeword symbols according to a preset pattern for initial transmission.

22. The apparatus of claim 20, wherein at retransmission of the codeword symbols, the selector selects a pattern defined such that a symbol after the last symbol of a previously transmitted sub-packet becomes a first symbol of a current sub-packet.

23. The apparatus of claim 20, wherein the selector selects symbols according to an incremental redundancy technique, if the data rate is higher than a preset threshold.

24. The apparatus of claim 20, wherein the selector selects symbols according to an incremental redundancy technique, if the data rate is equal to or less than a preset threshold.

25. The apparatus of claim 20, wherein the selector selects symbols according to a Chase combining technique, if the data rate is equal to or less than a preset threshold.
